Europäisches Patentamt

European Patent Office

Office européen des brevets

(19)

(11) Numéro de publication: **0 243 230**
**A1**

## (12) DEMANDE DE BREVET EUROPEEN

(21) Numéro de dépôt: 87400756.0

(22) Date de dépôt: 06.04.87

(51) Int. Cl.⁴: **F 16 F 15/12**
F 16 D 13/70

(30) Priorité: 11.04.86 FR 8605199

(43) Date de publication de la demande:
28.10.87 Bulletin 87/44

(84) Etats contractants désignés: DE

(71) Demandeur: **VALEO**
**64 Avenue de la Grande Armée**
**F-75017 Paris (FR)**

(72) Inventeur: **Despres, Dominique**
**24, rue du Général Roguet**
**F-92110 Clichy (FR)**

**Paquin, Jacques**
**83, avenue de Verdun**
**F-92390 Villeneuve-la-Garenne (FR)**

(74) Mandataire: **CABINET BONNET-THIRION**
**95 Boulevard Beaumarchais**
**F-75003 Paris (FR)**

(54) **Montage de rondelles élastiques à action axiale, par exemple rondelles Belleville , et volant amortisseur pour transmission, notamment pour véhicule automobile, comportant un tel montage.**

(57) Il s'agit d'un montage mettant en oeuvre, entre deux pièces (24) à solliciter en écartement l'une par rapport à l'autre, deux rondelles élastiques à action axiale (28) qui, chacune respectivement, portent par l'une de leurs zones périphériques sur l'une desdites pièces (24).

Suivant l'invention, par l'autre de leurs zones périphériques, ces rondelles élastiques à action axiale (28) portent aussi chacune respectivement sur l'autre des pièces (24), suivant une pluralité de points d'appui échelonnés circulairement autour de l'axe de l'ensemble, avec, circulairement, une imbrication relative de leurs dits poins d'appui.

Application, notamment, aux volants amortisseurs pour transmissions de véhicules automobiles.

FIG.3

## Description

"Montage de rondelles élastiques à action axiale, par exemple rondelles Belleville, et volant amortisseur pour transmission, notamment pour véhicule automobile, comportant un tel montage"

La présente invention concerne d'une manière générale les montages mettant en oeuvre, entre deux pièces à solliciter en écartement l'une par rapport à l'autre, deux rondelles élastiques à action axiale, par exemple des rondelles Belleville, et elle vise plus particulièrement, mais non nécessairement exclusivement, le cas où, sur la face des pièces concernées opposée à de telles rondelles élastiques à action axiale, interviennent des moyens de frottement.

C'est le cas dans certains volants amortisseurs pour transmissions, notamment pour transmissions de véhicules automobiles, lorsque, comme décrit par exemple dans le brevet américain US-A-4.274.524 ou la demande de brevet français déposée le 22 Janvier 1986 sous le No 86 00854, un tel volant amortisseur comporte deux parties coaxiales montées rotatives l'une par rapport à l'autre, avec, susceptibles d'intervenir entre elles, des moyens élastiques à action circonférentielle et/ou des moyens de frottement, et que l'une desdites parties coaxiales comporte elle-même deux flasques annulaires, qui interviennent en son sein par l'intermédiaire d'un limiteur de couple, et qui sont sollicités élastiquement en écartement l'un par rapport à l'autre.

En effet, sous la sollicitation élastique dont ils sont l'objet, ces flasques annulaires pressent chacun une rondelle de frottement contre une surface d'appui apartenant à la partie coaxiale dont ils forment l'un des constituants.

Si, au cours du fonctionnement, le couple à transmettre reste inférieur au couple de frottement correspondant à ces rondelles de frottement, tout se passe comme si, par ces dernières, les flasques annulaires en cause se trouvaient solidarisés en rotation aux surfaces d'appui correspondantes.

Par contre, si le couple à transmettre vient à être supérieur à ce couple de frottement, il se produit un glissement angulaire relatif entre les flasques concernés et les surfaces d'appui correspondantes, et, donc, entre les deux parties coaxiales constituant le volant amortisseur en cause.

Le couple de frottement contrôlant ainsi l'apparition de ce glissement angulaire, et donc la limitation de couple recherchée, dépend, notamment, de l'effort élastique exercé sur les flasques annulaires concernés.

Le plus souvent, à ce jour, le montage correspondant ne comporte, entre ces flasques annulaires, qu'une rondelle élastique à action axiale, et il s'agit en pratique d'une rondelle Belleville.

Par l'une de ses zones périphériques, cette rondelle Belleville porte sur l'un des flasques annulaires, et, par l'autre, elle porte sur l'autre de ceux-ci.

Dans l'un et l'autre cas, il s'agit d'un appui circulairement continu.

Cette disposition a donné et peut encore donner satisfaction.

Elle présente cependant des inconvénients, qui sont les suivants.

Tout d'abord, une seule rondelle Belleville étant mise en oeuvre, la pression qu'elle exerce sur chacun des flasques annulaires concernés se trouve très fortement localisée à la seule zone annulaire d'un tel flasque annulaire correspondant à son appui sur celui-ci.

Il ne peut manquer d'en résulter une usure irrégulière des rondelles de frottement correspondantes, et donc une augmentation progressive de la surface utile de celles-ci, au risque d'une instabilité de fonctionnement pour l'ensemble.

En outre, la rondelle Belleville portant, par exemple, par sa zone périphérique de plus grand diamètre, sur l'un des flasques annulaires, et, donc, par celle de plus petit diamètre, sur l'autre de ceux-ci, les zones annulaires de ces flasques annulaires concernées par l'effort élastique correspondant sont donc radialement à distance l'une de l'autre, et il ne peut manquer d'en résulter un certain déséquilibre entre les couples de frottement dus individuellement à l'une et l'autre des rondelles de frottement correspondantes.

Enfin, une seule rondelle Belleville peut être insuffisante pour développer l'effort élastique d'écartement nécessaire au couple de frottement recherché.

Il peut être songé, dans ce cas, à mettre en oeuvre deux ou plusieurs rondelles Belleville, en les superposant axialement les unes aux autres.

Mais, alors, les inconvenients succinctement exposés ci-dessus se perpétuent.

Lorsque deux rondelles Belleville sont mises en oeuvre, il peut également être songé à les disposer concentriquement l'une par rapport à l'autre.

Mais, alors, ces rondelles Belleville sont géométriquement différentes, la périphérie de plus grand diamètre de celle qui est disposée à l'intérieur de l'autre ayant un diamètre inférieur à celui de la périphérie de plus petit diamètre de cette dernière.

Outre que, au prix d'un renchérissement de l'ensemble, il en résulte la nécessité de prévoir un plus grand nombre de pièces différentes, il y a la possibilité, en mettant ainsi en oeuvre deux rondelles Belleville de caractéristiques différentes, d'un appariement imparfait de ces rondelles Belleville, au risque, là encore, d'une usure irrégulière des rondelles de frottement concernées, et donc d'une instabilité de fonctionnement pour l'ensemble.

La présente invention a d'une manière générale pour objet une disposition permettant d'éviter ces inconvénients.

De manière plus précise, elle a tout d'abord pour objet un montage de rondelles élastiques à action axiale, par exemple rondelles Belleville, du genre mettant en oeuvre, entre deux pièces à solliciter en écartement l'une par rapport à l'autre, deux rondelles élastiques à action axiale qui, chacune respectivement, portent par l'une de leurs zones périphériques sur l'une desdites pièces, ce montage étant d'une manière générale caractérisé en ce que, par l'autre de leurs zones périphériques, lesdites rondelles élastiques portent aussi, chacune respectivement, sur l'autre desdites pièces, suivant une pluralité de points d'appui échelonnés circulairement autour de l'axe de l'ensemble, avec, circulairement, une imbrication relative de leurs dits poins d'appui ; elle a encore pour objet un volant amortisseur pour transmission, notamment pour véhicule automobile, mettant en oeuvre un tel montage.

Ainsi, suivant l'invention, et à l'encontre des dispositions les plus usuelles dans ce domaine, l'appui de chacune des rondelles élastiques mises en oeuvre sur l'une des pièces concernées se fait, non pas, de manière circulairement continue, comme cela est d'ailleurs le cas pour l'autre desdites pièces, mais de manière circulairement discontinue.

C'est cette discontinuité qui autorise, circulairement, l'imbrication relative, suivant l'invention, de l'une à l'autr des pièces concernées, des points d'appui correspondants des deux rondelles élastiques mises en oeuvre.

Grâce à une telle disposition, chacune de ces pièces se trouve conjointement soumise à l'une et à l'autre de ces deux rondelles élastiques, l'une agissant sur elle par sa zone périphérique de plus grand diamètre, l'autre agissant sur elle par celle de plus petit diamètre.

Ainsi, c'est en deux de ses zones annulaires situées radialement à distance l'une de l'autre, que chacune de ces pièces se trouve soumise à l'effort élastique global d'écartement dû à l'ensemble des deux rondelles élastiques, ce qui assure une meilleure répartition de cet effort sur elle, et donc de meilleures conditions de fonctionnement pour la rondelle de frottement qui lui est associée.

En outre, les zones annulaires suivant lesquelles les rondelles élastiques portent ainsi sur l'une et l'autre de ces deux pièces s'étendent avantageusement suivant des circonférences de mêmes diamètres pour l'une et l'autre de celles-ci, ce qui est favorable à un bon équilibrage des couples de frottement dus individuellement à l'une et l'autre des rondelles de frottement correspondantes.

Les conditions étant égales par ailleurs, le fonctionnement de l'ensemble se trouve ainsi avantageusement stabilisé.

Enfin, les rondelles élastiques mises en oeuvre peuvent avantageusement être des rondelles Belleville, ce qui permet d'obtenir entre les deux pièces concernées une charge correcte malgré la variation d'écartement dont elles sont inévitablement l'objet au fur et à mesure de l'usure de la garniture de frottement des rondelles de frottement associées.

Les caractéristiques et avantages de l'invention ressortiront d'ailleurs de la description qui va suivre, à titre d'exemple, en référence aux dessins schématiques annexés sur lesquels :

la figure 1 est, avec des arrachements locaux, une vue partielle en élévation-coupe, suivant la ligne brisée I-I de la figure 2, d'un volant amortisseur mettant en oeuvre un montage suivant l'invention ;

la figure 2 est une vue partielle en coupe axiale de ce volant amortisseur, suivant la ligne II-II de la figure 1 ;

la figure 3 reprend, à échelle supérieure, le détail de la figure 2 repéré par un encart III sur celle-ci ;

la figure 4 est une vue partielle, en élévation, suivant la ligne IV-IV de la figure 3, des deux rondelles élastiques mises en oeuvre dans le montage suivant l'invention ;

les figures 5A, 5B sont, en correspondance avec la figure 4, des vues partielles, en élévation, de l'une et l'autre de ces deux rondelles élastiques, chacune étant prise isolément ;

la figure 6 est une vue analogue à celle de la figure 3, pour une variante de réalisation ;

les figures 7, 8 sont des vues respectivement analogues à celles des figures 3, 4 pour une autre variante de réalisation, l'une des deux rondelles élastiques concernées étant supposée enlevée sur la figure 8 ;

la figure 9 est une vue analogue à celle de la figure 7, pour une autre variante de réalisation.

Ces figures illustrent, à titre d'exemple, l'application de l'invention à un volant amortisseur pour transmission, notamment pour véhicule automobile.

Dans la forme de réalisation représentée, ce volant amortisseur est du type de celui décrit dans la demande de brevet français No 86 00854 mentionée ci-dessus.

Ce volant amortisseur ne faisant pas partie en soi de la présente invention, il ne sera ici que sommairement décrit.

Il comporte, globalement, deux parties coaxiales A, B, montées rotatives l'une par rapport à l'autre.

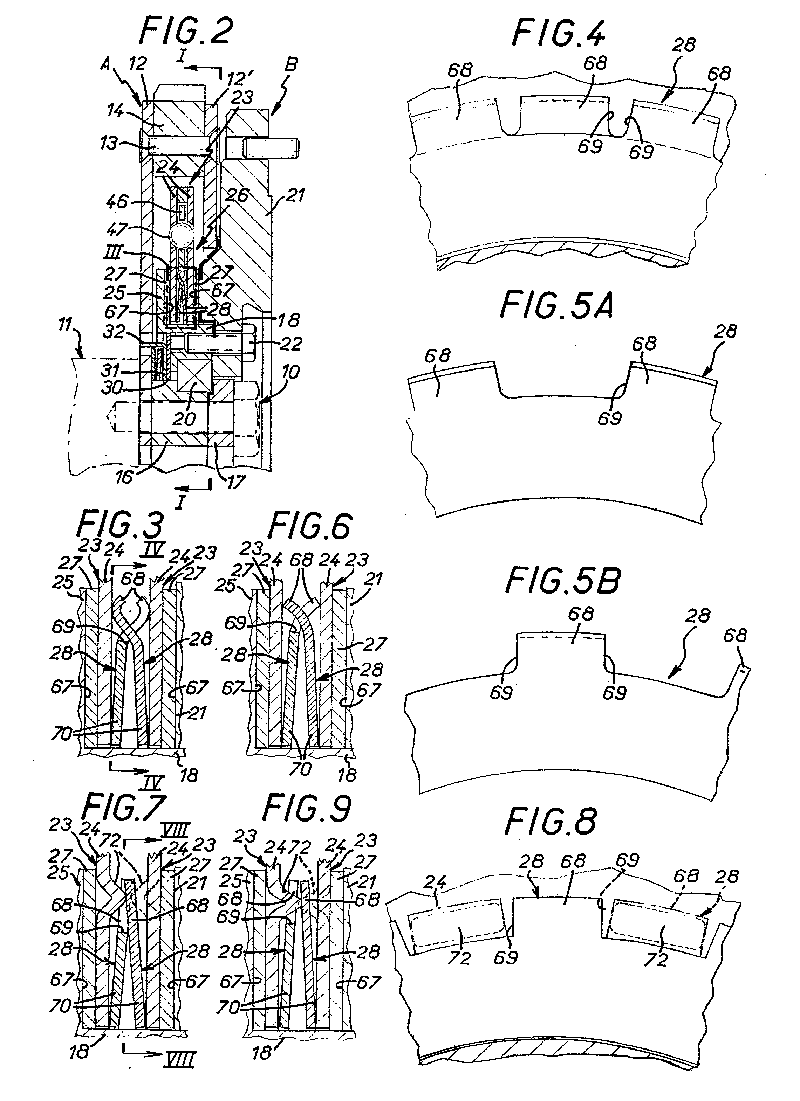

Tel que schématisé en traits interrompus à la figure 2, la partie A, ou partie d'entrée, est destinée à être solidarisée, par des vis 10, à un arbre 11, en pratique un arbre menant, par exemple l'arbre de sortie, ou vilebrequin, du moteur, dans le cas de l'équipement d'un véhicule automobile.

Cette partie A comporte, annulairement, autour de l'axe de l'ensemble, et à distance l'un de l'autre, deux flasques 12, 12'.

Par leur périphérie externe, ou de plus grand diamètre, ces flasques 12, 12' ont sensiblement même développement radial, et ils sont solidarisés l'un à l'autre, par exemple par des rivets 13, tel que représenté, avec insertion, entre eux, d'une entretoise annulaire 14.

Par leur périphérie interne, ou de plus petit diamètre, ils ont par contre des extensions radiales différentes, le flasque 12' s'arrêtant largement à distance de l'axe de l'ensemble.

A la périphérie interne du flasque 12 sont successivement accolées à celui-ci, du même côté que le flasque 12', deux rondelles annulaires 16, 17, qui, traversées, comme ledit flasque 12, par les vis 10, se trouvent par exemple solidarisées à ce flasque 12 par ces dernières.

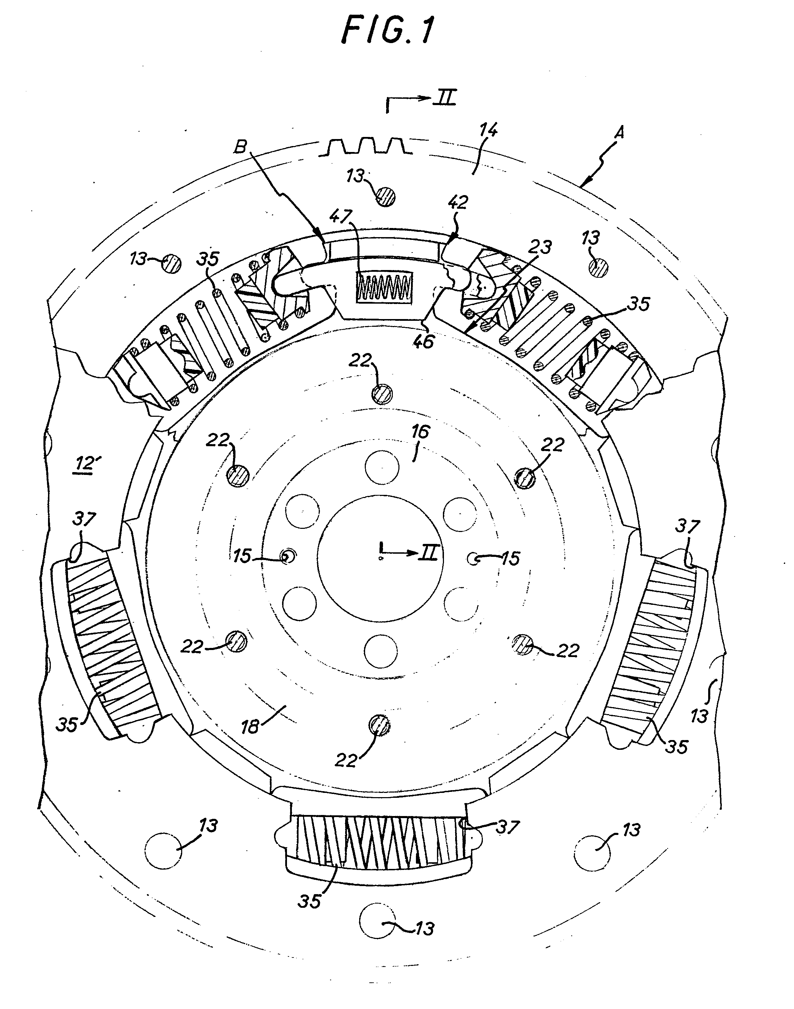

Tel que visible à la figure 1, il peut cependant être prévu, pour une solidarisation spécifique des rondelles 16, 17 au flasque 12 indépendamment de la fixation de l'ensemble sur l'arbre 11, des perçages taraudés 15.

La partie B, ou partie de sortie, comporte, globalement, quant à elle, d'une part, un moyeu 18, qui entoure la rondelle 16 de la partie A, avec interposition, entre lui et cette dernière, d'un roulement 20, et, d'autre part, un flasque 21, qui, par des vis 22, est rapporté sur ledit moyeu 18 et est ainsi solidarisé en rotation à celui-ci.

Par ce flasque 21, qui, pour l'essentiel, s'étend à l'extérieur du volume défini par les flasques 12, 12' de la partie A, le volant amortisseur concerné est adapté à pouvoir servir de plateau de réaction pour un disque de friction, non représenté, et à être ainsi solidarisé en rotation, par frottement, à ce disque de friction, alors même que le moyeu de celui-ci est solidaire en rotation d'un deuxième arbre, en pratique un arbre mené, par exemple l'arbre d'entrée d'une boîte de vitesses dans le cas, plus particulièrement concerné, de l'équipement d'un véhicule automobile.

La partie B comporte, en outre, annulairement, entre les flasques 12, 12' de la partie A, un voile 23, qui, pour des raisons qui apparaîtront ci-après, est lui-même formé de deux flasques annulaires 24.

Entre les parties coaxiales A, B ainsi globalement constituées sont susceptibles d'intervenir des moyens élastiques à action circonférentielle et/ou des moyens de frottement.

Dans la forme de réalisation représentée, les moyens élastiques à action circonférentielle mis en eouvre comportent des organes élastiques à action circonférentielle 35, disposés chacun individuellement dans des logements 37 ménagés pour eux dans les flasques 12, 12' de la partie A.

Pour coopération avec ces organes élastiques à action circonférentielle 35, le voile 23 de la partie B comporte, radialement, de place en place, des bras 42 s'étendant chacun individuellement entre deux successifs de tels organes élastiques à action circonférentielle 35.

Dans la forme de réalisation représentée, et suivant une disposition faisant l'objet de la demande de brevet français No 86 00854 mentionnée ci-dessus, il est associé, à ses bras 42, des moyens élastiques de centrage mettant en oeuvre, d'une part, des entretroises circonférentielles 46 s'étendant chacune respectivement entre deux organes élastiques à action circonférentielle 35, et, d'autre part, des organes élastiques de centrage 47 qui interviennent entre ces entretoises circonférentielles 46 et les bras 42 correspondants du voile 23 de la partie B, en étant chacun individuellement disposés dans des logements ménagés pour eux dans de telles entretoises circonférentielles 46 et de tels bras 42.

Cette disposition ne faisant pas l'objet de la présente invention, elle ne sera pas décrite plus en détail ici.

Il en est de même en ce qui concerne les moyens de frottement qui, par ailleurs, dans la forme de réalisation représentée, sont également susceptibles d'intervenir entre les parties A, B du volant amortisseur concerné.

Il suffira d'indiquer que ces moyens de frottement comportent en pratique une rondelle de frottement 30 qui, disposée au contact du moyeu 18 de la partie B, du côté de celui-ci tourné vers le flasque 12 de la partie A, est portée par une rondelle de support 31 calée en rotation par des pattes 32 sur ce flasque 12 à la faveur d'ouvertures ménagées à cet effet dans celui-ci.

En pratique, les deux flasques annulaires 24 constituant le voile 23 de la partie B interviennent au sein de celle-ci par l'intermédiare d'un limiteur de couple 26.

Suivant un montage précisé ci-après, ils sont à cet effet axialement sollicités élastiquement en écartement l'un par rapport à l'autre, pour serrage, chacun respectivement, de deux rondelles de frottement 27 contre deux surfaces d'appui 67 appartenant à la partie B.

Pour l'une de ces rondelles de frottement 27, celle disposée du côté du flasque 12 de la partie A, cette surface d'appui 67 appartient à une bride 25 que présente, radialement en saillie, à son extrémité correspondante, le moyeu 18 de la partie B.

Pour l'autre des rondelles de frottement 27, celle disposée du côté du flasque 12' de la partie A, la surface d'appui 67 appartient au flasque 21 de la partie B.

Entre les deux flasques annulaires 24 constitutifs du voile 23 de la partie B interviennent, pour leur sollicitation en écartement l'un par rapport à l'autre, et suivant le montage suivant l'invention précisé ci-après, deux rondelles élastiques à action axiale 28.

Il s'agit, en pratique, de rondelles Belleville, c'est-à-dire de rondelles ayant, au repos, une configuration globalement tronconique.

Les deux rondelles élastiques à action axiale 28 ainsi mises en oeuvre portent, chacune respectivement, par l'une de leurs zones périphériques, sur l'une des deux pièces ici concernées par le montage suivant l'invention, c'est-à-dire les deux flasques annulaires 24 constitutifs du voile 23 de la partie B.

Suivant l'invention, par l'autre de leurs zones périphériques, ces rondelles élastiques à action axiale 28 portent, aussi, chacune respectivement sur l'autre de ces pièces suivant une pluralité de points d'appui échelonnés circulairement autour de l'axe de l'ensemble, avec, circulairement, une imbrication relative de leurs dits points d'appui.

Dans les formes de réalisation représentées sur les figures 1 à 6, chacune des rondelles élastiques à action axiale 28 comporte, radialement, pour ce faire, c'est-à-dire le long de leur zone périphérique à points d'appui circulairement échelonnés, des pattes 68, et, de l'une à l'autre, lesdites pattes 68 sont circulairement alternées.

Dans les formes de réalisation représentées sur ces figures 1 à 6, les pattes 68 que présentent ainsi les rondelles élastiques à action axiale 28 sont établies le long de leur zone périphérique de plus grand diamètre, et il s'agit donc de pattes qui s'étendent radialement en direction opposée à l'axe de l'ensemble.

Quoi qu'il en soit, de l'une à l'autre, ces pattes 68 définissent circulairement entre elles des échancrures 69.

Pour l'imbrication relative recherchée pour les points d'appui concernés, et suivant l'alternance mentionnée ci-dessus, les pattes 68 de l'une des rondelles élastiques à action axiale 28 sont axialement au droit des échancrures 69 de l'autre, et réciproquement.

En pratique, dans les formes de réalisation représentées sur les figures 1 à 6, les deux rondelles élastiques à action axiale 28 mises en oeuvre s'interpénètrent axialement par leurs pattes 68, les pattes 68 de l'une traversant axialement les échancrures 69 correspondantes de l'autre, et réciproquement.

Pour ce faire, ces échancrures 69 ont une extension circonférentielle supérieure à celle des pattes 68.

De préférence, mais non pas nécessairement obligatoirement, les pattes 68 sont régulièrement réparties circulairement.

En pratique, elles s'étendent globalement obliquement par rapport à la partie courante 70 de la rondelle élastique à action axiale 28 qu'elles affectent, à compter de la zone périphérique concernée de celle-ci, et avec une conicité inférieure à celle de ladite partie courante.

Ainsi, leur zone active, c'est-à-dire celle par laquelle elles sont aptes à porter sur un flasque annulaire 24, est axialement déportée par rapport à cette partie courante 70.

Dans la forme de réalisation plus particulièrement représentée sur les figures 1 à 5, les pattes 68 des rondelles élastiques à action axiale 28 sont globalement arrondies en forme de demi-onde à leur extrémité, avec leur convexité tournée vers le flasque annulaire 24 sur lequel elles portent.

C'est donc dans ce cas par une zone active arrondie qu'elles portent sur un tel flasque annulaire 24.

En variante, figure 6, les pattes 68 des rondelles élastiques à action axiale 28 sont simplement recourbées en direction du flasque annulaire 24 contre lequel elles portent, et c'est donc par une zone active formée d'une arête qu'elles portent dans ce cas contre un tel flasque annulaire 24.

Bien entendu, cette arête peut elle-même avoir une forme arrondie.

Quoi qu'il en soit, par leur autre zone périphérique, celle dépourvue de pattes 68, et il s'agit en l'espèce de leur zone périphérique de plus petit diamètre, les rondelles élastiques à action axiale 28 portent chacune respectivement, et de manière circulairement continue, sur le flasque annulaire 24 opposé à celui sur lequel portent par ailleurs leurs pattes 68.

Autrement dit, ces rondelles élastiques à action axiale 28 s'étendent chacune respectivement d'un des flasques annulaires 24 à l'autre, en se croisant sensiblement en X à la faveur de leurs pattes 68 et leurs échancrures 69.

Ainsi, chacun des flasques annulaires 24 est soumis simultanément à l'une et à l'autre des deux rondelles élastiques à action axiale 28 dont chacune porte elle-même simultanément sur chacun de ces flasques annulaires 24, l'une portant sur un tel flasque annulaire 24 par une zone périphérique à points d'appui circulairement échelonnés, formée par ses pattes 68, l'autre portant sur lui par une zone périphérique circulairement continue.

Comme indiqué ci-dessus, il en résulte une meilleure répartition de l'effort élastique d'écartement dont sont ainsi l'objet les flasques annulaires 24, et donc de meilleures conditions de travail pour les moyens de frottement, en l'espèce les rondelles de frottement 27, intervenant sur leur face opposée aux rondelles élastiques à action axiale 28 qui les sollicitent ainsi en écartement.

Quoi qu'il en soit, si, en service, le couple transitant par le volant amortisseur concerné dépasse une valeur déterminée, il se produit, au niveau du limiteur de couple 26 que constituent les rondelles de frottement 27 en association avec les rondelles élastiques à action axiale 28 auxquelles elles sont soumises, un glissement angulaire relatif du voile 23 par rapport aux surfaces d'appui 67 qui l'encadrent, et donc, un glissement angulaire relatif, l'une par rapport à l'autre, des deux parties coaxiales A, B constituant ce volant amortisseur.

Dans ce qui précède, et grâce à la configuration propre des pattes 68 des rondelles élastiques à action axiale 28, les flasques annulaires 24 constituant le voile 23 sont plats.

En variante, figures 7 à 9, l'un au moins de ces flasques annulaires 24, et en pratique chacun de ceux-ci, comporte, axialement, en saillie, pour appui des pattes 68 de l'une des rondelles élastiques à action axiale 28, au moins un bossage 72 ; dans les formes de réalisation représentées, une pluralité de bossages 72, échelonnés circulairement autour de l'axe de l'ensemble, sont prévus, un par patte 68, chacun desdits bossages 72 étant au moins en partie axialement engagé entre deux pattes 68 de l'autre de ces rondelles élastiques à action axiale 28.

En pratique, dans ces formes de réalisation, ces bossages 72 résultent chacun d'un emboutissage local des flasques annulaires 24, et ils ont chacun une configuration globale allongée, en étant tous circonférentiellement allongés le long d'une même circonférence de l'ensemble.

Les deux flasques annulaires 24 comportant de tels bossages 72 dans les formes de réalisation représentées, il y a, circulairement, une imbrication relative de ces bossages 72 de l'un à l'autre de ces flasques annulaires 24, à la manière des pattes 68 des rondelles élastiques à action axiale 28.

Dans la forme de réalisation plus particulièrement représentée sur les figures 7 et 8, les rondelles élastiques à action axiale 28 s'interpénètrent encore légèrement axialement par leurs pattes 68 et leurs échancrures 69, comme précédemment, cependant que, au droit de la zone apicale de leurs bossages 72, les flasques annulaires 24 restent axialement à distance l'un de l'autre.

En variante, figure 9, il n'y a plus d'interpénétration des rondelles élastiques à action axiale 28, mais, en retour, par leurs bossages 72, les flasques annulaires 24 s'interpénètrent axialement.

Quoi qu'il en soit, dans l'un et l'autre cas, les pattes 68 des rondelles élastiques à action axiale 28 sont alors dans le prolongement de la partie courante 70 de celle-ci, sans s'étendre globalement

0 243 230

en oblique par rapport à cette partie courante 70 comme cela était le cas précédemment.

Bien entendu, la présente invention ne se limite pas aux formes de réalisation décrites et représentées, mais englobe toute variante d'exécution et/ou de combinaison de leurs divers éléments.

En particulier, au lieu de s'étendre le long de leur zone périphérique de plus grand diamètre, les pattes que présentent les rondelles élastiques à action axiale mises en oeuvre suivant l'invention pourraient aussi bien s'étendre le long de leur zone périphérique de plus petit diamètre.

En outre, suivant une combinaison des dispositions décrites en référence aux figures 5 et 7 par exemple, ces pattes peuvent être par exemple droites pour l'une de ces rondelles élastiques, en s'étendant dans le prolongement de la partie courante de celle-ci, et être obliques sur cette partie courante pour l'autre de ces rondelles élastiques, en étant alors par exemple plus ou moins courbes ou recourbées.

Corollairement, leur longueur étant faite suffisante, ces pattes peuvent participer par leur propre élasticité à l'élasticité de l'ensemble.

En outre, lorsqu'elles portent sur des bossages, il peut s'agir, pour l'une au moins des rondelles élastiques, voire même pour l'une et l'autre de celles-ci, d'un bossage circulairement continu, qui est alors unique, au lieu d'une pluralité de bossages discontinus.

Dans tous les cas, ces bossages rigidifient avantageusement les pièces qu'ils affectent.

De plus, au lieu d'être des rondelles du type rondelle Belleville, les rondelles élastiques à action axiale mises en oeuvre, qui ne sont d'ailleurs pas nécessairement de même nature, peuvent être d'un type différent, et par exemple présenter deux bandes circulairement continues à l'une et à l'autre de leurs périphéries, avec, reliant, de place en place, sensiblement radialement, ces bandes circulairement continues, des bras élastiquement déformables.

Il peut s'agir aussi de diaphragmes, c'est-à-dire de rondelles élastiques présentant une partie circulairement continue formant rondelle Belleville et une partie fragmentée en doigts radiaux par des fentes.

Dans tous les cas, la zone périphérique à points d'appui circulairement échelonnés de ces rondelles élastiques peut aussi en être la zone périphérique de plus petit diamètre au lieu d'en être la zone périphérique de plus grand diamètre.

Par ailleurs, le domaine d'application de l'invention ne se limite pas à celui des seuls volants amortisseurs pour véhicules automobiles, mais s'étend d'une manière plus générale à celui de tous les montages mettant en oeuvre des moyens élastiques à action axiale, et plus particulièrement dans le cas où, sur la face opposée des pièces sur lesquelles agissent en écartement ces moyens élastiques à action axiale, interviennent des moyens de frottement.

## Revendications

1. Montage de rondelles élastiques à action axiale, par exemple rondelles Belleville, du genre mettant en oeuvre, entre deux pièces (24) à solliciter en écartement l'une par rapport à l'autre, deux rondelles élastiques à action axiale (28) qui, chacune respectivement, portent par l'une de leurs zones périphériques sur l'une desdites pièces (24), caractérisé en ce que, par l'autre de leurs zones périphériques, lesdites rondelles élastiques (28) portent aussi, chacune respectivement, sur l'autre desdites pièces (24), suivant une pluralité de points d'appui échelonnés circulairement autour de l'axe de l'ensemble, avec, circulairement, une imbrication relative de leurs dits points d'appui.

2. Montage suivant la revendication 1, caractérisé en ce que, le long de leur zone périphérique à points d'appui circulairement échelonnés, chacune des rondelles élastiques à action axiale (28) comporte radialement des pattes (68), et, de l'une à l'autre, lesdites pattes (68) sont circulairement alternées.

3. Montage suivant la revendication 1, caractérisé en ce que, les pattes (68) des rondelles élastiques à action axiale (28) définissant circulairement entre elles des échancrures (69), les pattes (68) de l'une de ces rondelles élastiques à action axiale sont axialement au droit des échancrures (69) de l'autre, et réciproquement.

4. Montage suivant l'une quelconque des revendications 1, 2, caractérisé en ce que, pour appui des pattes (68) de l'une des rondelles élastiques à action axiale (28), l'une au moins des pièces (24) concernées comporte axialement en saillie au moins un bossage (72).

5. Montage suivant la revendication 4, caractérisé en ce qu'une pluralité de bossages (72), échelonnés circulairement autour de l'axe de l'ensemble, sont prévus.

6. Montage suivant la revendication 5, caractérisé en ce qu'il y a un bossage (72) par patte (68), et chacun des bossages (72) ainsi mis en oeuvre est au moins en partie axialement engagé entre deux pattes (68) de l'autre des rondelles élastiques à action axiale (28).

7. Montage suivant la revendication 4, caractérisé en ce qu'un bossage (72) unique, circulairement continu, est prévu sur la pièce (24) concernée.

8. Montage suivant l'une quelconque des revendications 4 à 7, caractérisé en ce que l'une et l'autre des pièces (24) concernées comportent axialement en saillie au moins un bossage (72).

9. Montage suivant la revendication 8, caractérisé en ce que l'une et l'autre des pièces (24) concernées comportent une pluralité de bossages (72) échelonnés circulairement autour de l'axe de l'ensemble, avec, circulairement, une imbrication relative de ces derniers.

10. Montage suivant la revendicaton 9, caractérisé en ce que, par leurs bossages (72), les deux pièces (24) s'interpénètrent axialement.

11. Montage suivant l'une quelconque des revendications 1 à 10, caractérisé en ce que, par leurs pattes (68), les deux rondelles élastiques à action axiale (28) s'interpénètrent axialement.

12. Montage suivant l'une quelconque des revendications 2 à 11, caractérisé en ce que les pattes (68) d'une rondelle élastique à action axiale (28) s'étendent globalement obliquement par rapport à sa partie courante.

13. Montage suivant l'une quelconque des revendications 2 à 11, caractérisé en ce que les pattes (68) d'une rondelle élastique à action axiale (28) s'étendent dans le prolongement de sa partie courante.

14. Montage suivant l'une quelconque des revendications 1 à 13, caractérisé en ce que la zone périphérique à points d'appui circulairement échelonnés des rondelles élastiques à action axiale (28) en est la zone périphérique de plus grand diamètre.

15. Montage suivant l'une quelconque des revendications 1 à 13, caractérisé en ce que la zone périphérique à points d'appui circulairement échelonnés des rondelles élastiques à action axiale (28) en est la zone périphérique de plus petit diamètre.

16. Montage suivant l'une quelconque des revendications 1 à 15, caractérisé en ce que sur la face des pièces (24) concernées opposée aux rondelles élastiques à action axiale (28) interviennent des moyens de frottement (27).

17. Volant amortisseur pour transmission notamment pour véhicule automobile, du genre comportant deux parties coaxiales (A, B) montées rotatives l'une par rapport à l'autre, avec, susceptibles d'intervenir entre elles, des moyens élastiques à action circonférentielle (35) et/ou des moyens de frottement (30), l'une desdites parties coaxiales (A, B) comportant elle-même deux flasques annulaires (24) intervenant en son sein par l'intermédiaire d'un limiteur de couple (26) et sollicités élastiquement en écartement l'un par rapport à l'autre, caractérisé en ce que entre lesdits flasques annulaires (24) interviennent deux rondelles élastiques à action axiale (28), suivant un montage conforme à l'une quelconque des revendications 1 à 16.

*FIG.1*

0243230

FIG.2

FIG.4

FIG.5A

FIG.3

FIG.6

FIG.5B

FIG.7

FIG.9

FIG.8

0243230

# RAPPORT DE RECHERCHE EUROPEENNE

Office européen des brevets

Numéro de la demande

EP 87 40 0756

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 560 954 (DAIKIN SEISAKUSHO) <br> * Page 3, ligne 32 - page 4, ligne 13; figures 2-5 * | 1 | F 16 F 15/12 <br> F 16 D 13/70 |

-----

DOMAINES TECHNIQUES RECHERCHES (Int. Cl.4)

F 16 F
F 16 D

Le présent rapport de recherche a été établi pour toutes les revendications

| Lieu de la recherche | Date d'achèvement de la recherche | Examinateur |
|---|---|---|
| LA HAYE | 29-07-1987 | ZERI A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82